# DEMANDE DE BREVET EUROPEEN

(11) **EP 4 299 449 A1**
(43) Date de publication de la demande: **03.01.2024**
(21) Numéro de dépôt: 22305936.1
(22) Date de dépôt: 27.06.2022
(51) Int. Cl.: B64G 1/24, B64G 1/40, B64G 1/42, F03H 1/00

(54) **PROCÉDÉ DE PILOTAGE D'UN PROPULSEUR PLASMIQUE**

(71) Demandeur: Airbus Defence and Space SAS, 31402 Toulouse Cedex 4 (FR)
(72) Inventeur: NICOLAS, Dominique, 31402 TOULOUSE CEDEX 4 (FR); KIRCH, Paul, 31402 TOULOUSE CEDEX 4 (FR); GRENIER, Julien, 31402 TOULOUSE CEDEX 4 (FR)
(74) Mandataire: Plasseraud IP

(57) **Abrégé**

L'invention améliore la propulsion d'un moteur HET, RIT ou GIT, lors d'éclipses solaires et comporte, avant l'éclipse solaire:
- l'arrêt de la poussée (TCE) puis la coupure du bus alimenté par panneau solaire (TDoff);
- la diminution du débit de fluide (Db) alimentant le plasma de maintien en température, dans l'organe émetteur d'électrons pour neutraliser le faisceau ionique;
- l'augmentation du courant (Ch) dans le plasma de maintien en température alimenté par batterie; en fin d'éclipse solaire (TCF):
- l'augmentation du débit de fluide (Dnom) alimentant le plasma de maintien en température;
- la réduction du courant (Cnom) dans le plasma de maintien en température, en sortie d'éclipse:
- la remise en tension du bus alimenté par panneau puis la reprise de la poussée.

## Description

### Domaine technique de l'invention

La présente invention s'inscrit dans le domaine de la propulsion spatiale. Plus particulièrement, la présente invention se rapporte à un procédé de pilotage, à bord des véhicules spatiaux, destiné à réduire la durée de rallumage d'un propulseur plasmique lors des éclipses solaires.

### Etat de la technique

Dans le domaine de la propulsion spatiale, les propulseurs électriques sont de plus en plus utilisés, notamment pour les commandes d'orientation, de maintien en orbite voire de mise en orbite ou de sortie d'orbite de véhicules spatiaux, plus spécifiquement de satellites ou de sondes interplanétaires, en remplacement ou en complément des propulseurs chimiques. Les propulseurs électriques alimentés par les panneaux solaires permettent notamment de réduire la consommation de fluide utilisé lors de la propulsion et donc réduisent la masse initiale du véhicule spatial.

Parmi les différents types de propulseurs électriques, il existe notamment les propulseurs dits plasmiques, tels que les propulseurs à effet Hall, dit HET(acronyme anglais pour « Hall-Effect Thruster »), les propulseurs ioniques à grilles tels que les propulseurs de type Kaufman, dit GIT (acronyme anglais pour « Gridded Ion Thruster »), ou les propulseurs à grilles de type RIT (acronyme anglais pour « Radio-frequency Ion Thruster »).

Les architectures des propulseurs électriques à effet Hall, à grilles de type Kaufman ou à grilles de type RIT sont bien connues de l'homme du métier. A titre d'exemple d'ouvrage de référence, on peut citer « Fundamentals of Electric Propulsion : Ion and Hall Thrusters », Dan M. Goebel and Ira Katz, JPL SPACE SCIENCE AND TECHNOLOGY SERIES, mars 2008. Ils ne sont que brièvement rappelés ici.

Les propulseurs à effet Hall et les propulseurs à grilles utilisent notamment certains principes similaires. Un fluide, généralement du xénon, est injecté et ionisé dans une chambre, dite de décharge, pour former un plasma dit de propulsion. Les ions créés sont ensuite accélérés par l'application d'un champ électrique pour former un faisceau ionique. Un organe émetteur d'électrons neutralisant le faisceau ionique émet des électrons neutralisant les ions accélérés pour une neutralité électrique du véhicule spatial. L'organe émetteur d'électrons neutralisant le faisceau ionique est externe à la chambre de décharge.

Les technologies, à effet Hall et à grilles, diffèrent notamment dans la façon de générer le champ électrique d'accélération des ions pour la poussée. Dans les propulseurs à effet Hall, le champ électrique est généré au moyen d'une différence de potentiel électrostatique entre une anode et une cathode. Les ions circulent de la chambre de décharge, située en amont du propulseur, vers le plan de sortie, situé en aval du propulseur, par la pression générée par l'arrivée du fluide dans la chambre de décharge. Les électrons suivent les lignes de champ magnétique créées par un aimant ou une bobine avant de percuter chacun un atome de la matière de fluide et de générer un ion positif, chacun des ions ainsi générés étant accélérés par le potentiel électrostatique mentionné, générant le faisceau ionique permettant de produire la poussée. Dans les propulseurs ioniques à grilles, le champ électrique est généré au moyen de deux grilles polarisées. Les électrons sont extraits du plasma de propulsion de la chambre de décharge par la grille polarisée positivement. Les ions circulent de la chambre de décharge vers la zone située entre les deux grilles par la pression générée par l'arrivée du fluide dans la chambre de décharge. L'accélération des ions par le potentiel entre les deux grilles expulse les ions hors du propulseur et génère ainsi le faisceau ionique permettant de produire la poussée. La puissance électrique utilisée pour la poussée générée par les propulseurs plasmiques est fournie généralement par les panneaux solaires installés sur le véhicule spatial.

Lors de ses missions, un véhicule spatial peut par exemple être soumis régulièrement à des éclipses solaires, de durée et d'occurrence régulières ou non, par exemple lorsqu'un satellite se rapproche ou s'éloigne de la planète autour de laquelle le satellite est en orbite. Les éclipses solaires conduisent à des interruptions de génération de la puissance électrique par les panneaux solaires embarqués dans le véhicule spatial. Durant les éclipses solaires, le véhicule spatial peut utiliser l'énergie électrique stockée dans les batteries embarquées à son bord, mais leur capacité reste toutefois limitée.

La demande US2020/00198807 déposée par BOEING intitulée « Autonomous control of electric power supplied to a thruster during electric orbit raising» enseigne notamment une surveillance de la charge de la batterie en prévision d'une éclipse.

### Présentation de l'invention

La présente invention vise à améliorer encore la commande d'un propulseur plasmique, notamment du type HET, RIT ou GIT, lorsque surviennent des éclipses solaires.

A cet effet, il est proposé un procédé de gestion d'un système de propulsion électrique d'un véhicule spatial lors d'au moins une éclipse solaire, ledit véhicule spatial comprenant :
- au moins un panneau solaire,
- au moins une batterie alimentée durant des phases d'ensoleillement par ledit panneau solaire,
- au moins un propulseur plasmique comportant un organe d'ionisation et d'accélération d'un premier plasma, dit de propulsion, produisant un faisceau ionique et au moins un deuxième plasma, dit de maintien en température, généré au moins dans un organe émetteur d'électrons pour neutraliser le faisceau ionique,
- une unité de régulation de débit de fluide alimentant en fluide d'une part le plasma de propulsion et d'autre part le plasma de maintien en température,
- une unité de pilotage en puissance électrique dudit propulseur plasmique, l'unité de pilotage étant alimentée par ledit panneau solaire et par ladite batterie, l'unité de pilotage comprenant au moins un premier bus alimenté par ladite batterie et au moins un deuxième bus alimenté directement par ledit panneau solaire,
le procédé comportant :
- une étape de fourniture d'au moins une éphéméride représentative du début et de la fin de ladite éclipse solaire ;
et étant caractérisé en ce qu'il comporte :
- dans un premier intervalle de temps prédéterminé avant le début de ladite éclipse solaire :
   ∘ une étape d'arrêt de la poussée dudit propulseur plasmique, par l'unité de pilotage puis de coupure dudit deuxième bus;
   ∘ une étape de diminution, commandée par l'unité de régulation, du débit de fluide alimentant le plasma de maintien en température, au moins dans l'organe émetteur d'électrons pour neutraliser le faisceau ionique, jusqu'à une valeur prédéfinie non nulle inférieure à une valeur nominale ;
   ∘ une étape d'augmentation, commandée par l'unité de pilotage, du courant électrique dans le plasma de maintien en température, au moins dans l'organe émetteur d'électrons pour neutraliser le faisceau ionique, jusqu'à une valeur prédéfinie pour un maintien en température, hors poussée, du plasma de maintien en température, ledit plasma de maintien en température étant alimenté par ledit premier bus;
- puis, dans un deuxième intervalle de temps prédéterminé avant la fin de l'éclipse solaire ou dans un troisième intervalle de temps prédéterminé après la fin de l'éclipse solaire :
   ∘ une étape d'augmentation, commandée par l'unité de régulation, du débit de fluide alimentant le plasma de maintien en température, au moins dans l'organe émetteur d'électrons pour neutraliser le faisceau ionique, jusqu'à sa valeur nominale ;
   ∘ une étape de réduction, commandée par l'unité de pilotage, du courant électrique dans le plasma de maintien en température, au moins dans l'organe émetteur d'électrons pour neutraliser le faisceau ionique,
- puis en sortie d'éclipse, dans le troisième intervalle de temps prédéterminé après la fin de l'éclipse solaire :
   ∘ une étape de mise en tension dudit deuxième bus puis de reprise de la poussée du propulseur plasmique, commandée par l'unité de pilotage.

Selon une particularité de l'invention, lorsque le moteur plasmique est du type GIT et comprend une cathode de génération de la décharge dans le plasma de propulsion, cette cathode de génération étant maintenue en température par un plasma de maintien en température traversé par un courant de maintien en température, les étapes suivantes sont également appliquées à la commande de cette cathode de génération :
∘ l'étape de diminution, commandée par l'unité de régulation, du débit de fluide alimentant le plasma de maintien en température, jusqu'à une valeur prédéfinie non nulle inférieure à une valeur nominale;
∘ l'étape d'augmentation, commandée par l'unité de pilotage, du courant électrique dans le plasma de maintien en température jusqu'à une valeur prédéfinie pour le maintien en température, hors poussée, du plasma de maintien en température, ledit plasma de maintien en température étant alimenté par ledit premier bus;
∘ l'étape d'augmentation, commandée par l'unité de régulation, du débit de fluide alimentant le plasma de maintien en température jusqu'à sa valeur nominale ;
∘ l'étape de réduction, commandée par l'unité de pilotage, du courant électrique dans le plasma de maintien en température

Selon une autre particularité de l'invention, lorsque le propulseur plasmique ne nécessite pas de maintien en température de son organe émetteur d'électrons neutralisant le faisceau ionique, pendant une phase de poussée dudit propulseur plasmique:
l'étape d'arrêt de la poussée puis de coupure du deuxième bus est réalisée après les étapes de diminution du débit de fluide et d'augmentation du courant de maintien en température,
ces dernières étapes étant précédées d'une étape de démarrage de l'alimentation du courant de maintien en température.

Selon une autre particularité de l'invention, lorsque le propulseur plasmique nécessite un maintien en température au moins de son organe émetteur d'électrons neutralisant le faisceau ionique, par l'unité de pilotage, pendant une phase de poussée, l'étape d'arrêt de la poussée puis de coupure du deuxième bus est réalisée avant les étapes de diminution du débit de fluide et d'augmentation du courant de maintien en température.

Selon une autre particularité de l'invention, dans le cas d'un moteur RIT ou GIT, l'étape d'arrêt de la poussée puis de coupure du deuxième bus comprend successivement :
- une commande de la coupure de la poussée par coupure de l'alimentation des grilles résultant dans une coupure du faisceau ionique et
- une commande de l'arrêt de la décharge dans le plasma de propulsion à l'intérieur de la chambre de décharge par coupure du bloc d'alimentation d'ionisation appartenant à l'unité de pilotage avant
- la coupure du deuxième bus lors de l'entrée dans l'éclipse.

Selon une autre particularité de l'invention, pour les moteurs RIT et GIT, l'étape de mise en tension du deuxième bus puis de reprise de la poussée comprend successivement :
- l'alimentation du deuxième bus commandée lors de la sortie de l'éclipse,
- une commande de rallumage de la décharge dans le plasma de propulsion à l'intérieur de la chambre de décharge par réactivation du bloc d'alimentation d'ionisation appartenant à l'unité de pilotage avant
- une commande de rallumage de la poussée par réactivation de l'alimentation des grilles résultant dans un rétablissement du faisceau ionique.

Selon une autre particularité de l'invention, dans le cas d'un moteur HET, l'étape d'arrêt de la poussée puis de coupure du deuxième bus comprend successivement :
- une commande de la coupure de la poussée par coupure de l'alimentation de l'anode résultant dans une coupure du faisceau ionique et
- la coupure du deuxième bus lors de l'entrée dans l'éclipse.

Selon une autre particularité de l'invention, pour les moteurs HET, l'étape de mise en tension du deuxième bus puis de reprise de la poussée comprend successivement :
- l'alimentation du deuxième bus lors de la sortie de l'éclipse,
- une commande de rallumage de la décharge dans le plasma de propulsion à l'intérieur de la chambre de décharge par réactivation du bloc d'alimentation d'anode appartenant à l'unité de pilotage résultant dans un rétablissement du faisceau ionique.

Selon une autre particularité de l'invention, la coupure ou l'alimentation du deuxième bus est commandée par une unité de distribution de l'énergie.

L'invention permet avantageusement d'éviter les étapes particulièrement longues de chauffage initial de l'organe émetteur d'électrons neutralisant le faisceau ionique, tel que neutraliseur ou cathode, en sortie d'éclipse pour pouvoir activer une poussée. L'invention permet ainsi de minimiser le temps de redémarrage du propulseur électrique, après l'occurrence d'une éclipse solaire et d'augmenter ainsi le temps de poussée disponible. Grâce à l'invention on évite ainsi une période de chauffage pouvant s'avérer relativement longue. Par exemple un temps de chauffage de 10 min pendant une période d'ensoleillement de 20 min ne laisse que 10 min disponibles pour la poussée, ce qui pénalise la durée totale de poussée et donc les performances de mission, contre 20 min disponibles pour la poussée selon le procédé selon l'invention. Selon un autre exemple, un temps de chauffage de 10 min après une éclipse de seulement 3 min provoque un arrêt de propulsion d'au moins 13 min, contre un arrêt de propulsion de seulement 3 min avec le procédé selon l'invention. Globalement, on évite ainsi de nombreux allumages complets du propulseur plasmique, chacun de ces allumages complets étant en effet une séquence relativement longue et fortement consommatrice en fluide de propulsion et en énergie électrique où l'organe émetteur d'électrons neutralisant le faisceau ionique devait, par exemple, être chauffé pendant plusieurs minutes, typiquement une dizaine de minutes, à chaque allumage complet du propulseur électrique.

Avantageusement encore, la dissociation des alimentations de l'organe émetteur d'électrons neutralisant le faisceau ionique d'une part, et de l'organe d'accélération des ions d'autre part, permet une augmentation du courant dans le plasma de maintien en température lors des éclipses. Cela induit un maintien en conditions opérationnelles de l'organe émetteur d'électrons neutralisant le faisceau ionique, malgré l'absence de contribution à l'intensité du courant de retour de l'organe d'accélération des ions lorsqu'il est activé.

Selon un autre avantage de l'invention, lors des éclipses, la diminution du débit de fluide dans l'organe émetteur d'électrons neutralisant le faisceau ionique permet de maintenir une faible consommation de fluide et donc un impact négligeable sur l'emport de fluide nécessaire pour la mission. Afin que le plasma de maintien en température utilisé par l'organe émetteur d'électrons neutralisant le faisceau ionique soit maintenu à une densité suffisante, le courant d'alimentation du plasma de maintien en température peut être augmenté, en configurant le bloc d'alimentation des électrodes de maintien en température.

Le procédé selon l'invention est avantageusement adapté à un propulseur à effet Hall, un propulseur plasmique à grilles à décharge en courant continu de type Kaufman ou encore un propulseur plasmique à grilles à décharge en courant radiofréquence.

Selon encore un autre avantage de l'invention, en évitant de nombreux rallumages, on réduit les impacts, en termes de fatigue, sur l'organe émetteur d'électrons neutralisant le faisceau ionique, se présentant sous la forme d'une cathode ou d'un neutraliseur, qui se caractérise généralement par une durée de vie limitée notamment en fonction d'un nombre de cycles maximum déterminé. Les rallumages répétés sont en effet source de fatigue matérielle de la cathode ou du neutraliseur.

### Brève description des figures

L'invention sera mieux comprise à la lecture de la description détaillée donnée à titre d'exemple nullement limitatif et faite en se référant aux exemples illustrés par les figures où :
- la figure 1 est une représentation schématique d'un exemple de système de propulsion électrique, comportant un propulseur plasmique à Effet Hall (HET) ;
- la figure 2 est une représentation schématique d'un exemple de système de propulsion électrique, comportant un propulseur plasmique à grilles à décharge en courant continu de type Kaufman (GIT);
- la figure 3 est une représentation schématique d'un exemple de système de propulsion électrique, comportant un propulseur ionique à grilles à décharge en courant radiofréquence (RIT) ;
- la figure 4 présente un schéma d'un exemple de gestion, pendant une éclipse solaire, d'un propulseur plasmique du type utilisant le courant de maintien en température de l'organe émetteur d'électrons neutralisant le faisceau ionique, toujours à l'état activé même pendant une phase de poussée ;
- la figure 5 présente un schéma d'un exemple de gestion, pendant une éclipse solaire, d'un propulseur plasmique du type pilotant le courant de maintien en température de l'organe émetteur d'électrons neutralisant le faisceau ionique, à l'état désactivé pendant une phase de poussée ;
- la figure 6 représente un exemple de procédé de pilotage selon l'invention correspondant à la figure 5 ;
- la figure 7 représente un exemple de procédé de pilotage selon l'invention correspondant à la figure 4 ;
- la figure 8 représente un exemple d'arrêt de la poussée puis de coupure du bus alimenté directement par panneau solaire pour un moteur RIT ou GIT ;
- la figure 9 représente un exemple d'activation du bus de puissance et de reprise de poussée pour un moteur RIT ou GIT ;
- la figure 10 représente un exemple d'arrêt de la poussée puis de coupure du bus alimenté directement par panneau solaire pour un moteur HET ;
- la figure 11 représente un exemple d'activation du bus de puissance et de reprise de poussée pour un moteur HET ;
- la figure 12 représente un exemple d'alimentation par un panneau solaire et par une batterie dans un satellite.

### Description détaillée d'exemples de réalisation

Dans les figures, des références numériques identiques d'une figure à l'autre désignent des éléments identiques. Les dessins ne sont pas à l'échelle, sauf mention contraire.

La présente invention concerne un procédé de gestion d'un système de propulsion électrique d'un véhicule spatial lors d'une éclipse solaire.

L'invention est décrite dans le contexte particulier non limitatif d'un de ses domaines d'application préférés dans lequel le véhicule spatial est un satellite. Préférentiellement, le véhicule spatial est destiné à une mission interplanétaire réalisant par exemple des abaissements et élévations d'orbite par propulsion électrique.

Le satellite comprend généralement différents modules fonctionnels et notamment un ordinateur de bord et un module de télécommunication avec une station au sol permettant une transmission par la station au sol des données représentatives des prévisions d'éclipses également désignées par éphémérides. L'ordinateur de bord communique avec le module de télécommunication et avec un module, également désigné par PPU (acronyme anglais pour « Power Processing Unit »), de gestion de la puissance du système de propulsion électrique réalisant un pilotage électrique de la puissance moteur. La PPU peut également réaliser un pilotage du module de régulation des débits de fluides.

Les éclipses sont généralement connues avec une grande précision, les dates des éclipses étant transmises au satellite. La station au sol peut en effet réaliser des simulations de grande précision pour obtenir les dates des éclipses. Lors d'une mission d'exploration, les éclipses peuvent être irrégulières en durée et en dates. La durée d'une orbite sera par exemple de plus en plus longue ou de plus en plus courte selon que le satellite se rapproche d'une planète ou s'en éloigne. Par ailleurs, la durée d'une éclipse dépend également de l'inclinaison du véhicule spatial autour de la planète et de la position de la planète autour du Soleil.

La station au sol peut envoyer des mises à jour d'éphémérides, c'est-à-dire les dates d'entrée et de sortie d'éclipses, afin d'anticiper les situations où le véhicule spatial sera soumis à une éclipse. La précision reste bonne lors de l'éclipse notamment du fait de la dérive lente due à la poussée relativement limitée générée par les propulseurs électriques. De plus, les éphémérides peuvent être régulièrement mises à jour, ce qui augmente encore la précision. On mettra par exemple en œuvre, dans le procédé selon l'invention, des marges temporelles de sécurité pour pallier les éventuelles imprécisions des prévisions. On prévoit notamment des marges temporelles entre l'extinction des alimentations de poussée et de décharge du propulseur et le début effectif de l'éclipse. On prévoit par exemple des marges temporelles entre la sortie effective de l'éclipse et le rallumage des alimentations de décharge et de poussée du propulseur.

Le véhicule spatial comporte un système de propulsion plasmique 10a, 10b ou 10c destiné à réaliser les opérations de manœuvre dudit véhicule spatial. Le véhicule spatial peut comprendre un ou plusieurs ensembles de propulsion comprenant chacun un régulateur de pression, un régulateur de fluide et un propulseur électrique tous par exemple commandés par la PPU 20a, 20b ou 20c (acronyme anglais pour « Power Processing Unit »).

Le véhicule spatial comporte en outre un ou plusieurs panneaux solaires. Chaque panneau solaire est configuré pour convertir l'énergie lumineuse en énergie électrique. Cette énergie électrique est destinée à alimenter certains éléments du véhicule spatial nécessaires au fonctionnement du véhicule spatial, notamment certains éléments constitutifs du système de propulsion électrique.

Le véhicule spatial comporte en outre une ou plusieurs batteries (non représentée), de préférence une pluralité de batteries, destinée à alimenter électriquement des éléments du véhicule spatial nécessaires à son fonctionnement.

La ou les batteries sont également destinées à alimenter certains éléments constitutifs du système de propulsion électrique, comme il sera décrit ultérieurement. Les éléments alimentés par la ou les batteries ne sont pas alimentés directement par le ou les panneaux solaires.

Une batterie est rechargée électriquement par l'énergie électrique provenant d'un panneau solaire et continue de fonctionner lors des éclipses solaires, son épuisement dépendant de sa capacité. Avantageusement, la batterie est dimensionnée pour couvrir les besoins du véhicule spatial au moins dans le cas le plus contraignant correspondant à l'éclipse la plus longue.

Les propulseurs HET sont utilisés depuis plusieurs années pour les satellites de télécommunication. Il existe également des exemples d'utilisation de propulseur HET pour des engins interplanétaires comme la mission lunaire SMART-1 ou la mission Psyche vers des astéroïdes. Les propulseurs RIT sont notamment sérieusement envisagés pour compléter les capacités industrielles de constructeurs d'engin spatiaux et pour l'exploration planétaire. Les propulseurs GIT sont utilisés par exemple pour la mission Deep Space 1 survolant une comète, pour la mission Dawn se mettant en orbite autour des astéroïdes Vesta et de la planète naine Cérès, ou pour la mission BepiColombo lancée vers Mercure, mais sont également employés depuis plusieurs années pour les satellites de télécommunication.

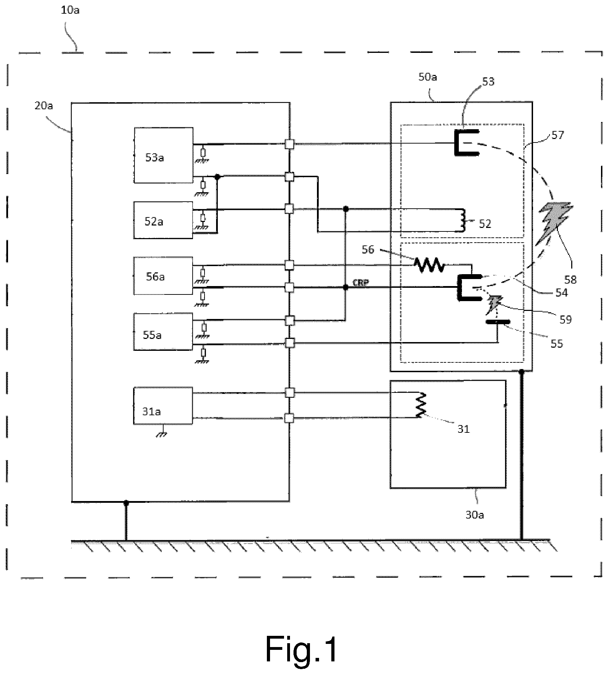

La figure 1 est une représentation schématique d'un exemple de système de propulsion électrique utilisant un propulseur à Effet Hall.

L'organe d'ionisation et d'accélération du plasma de propulsion comprend, par exemple, dans le propulseur à effet Hall :
- une chambre de décharge 57,
- une ou plusieurs bobines 52 réalisant un confinement magnétique du plasma dans la chambre de décharge et,
- une anode 53 produisant un courant de décharge 58 vers la cathode 54.

La chambre de décharge se présente généralement sous la forme d'un canal annulaire, avec une extrémité amont fermée et une extrémité aval ouverte.

L'anode 53 est située au niveau de l'extrémité amont fermée de la chambre de décharge. Une source d'alimentation 53a, par exemple une source de tension, alimente l'anode 53. La source de tension 53a est disposée dans l'unité d'alimentation dite PPU 20a. Cette source de tension fait ainsi partie d'un bloc d'alimentation de l'anode. La génération du plasma de propulsion dans la chambre de décharge est assurée par la différence de potentiel entre l'anode 53 et la cathode 54. Du fluide est injecté au niveau de l'extrémité amont fermée de la chambre de décharge. Le circuit magnétique 52 entoure la chambre de décharge. Le circuit magnétique 52 est configuré pour générer un champ magnétique radial dans la chambre de décharge, champ magnétique radial dont l'intensité est généralement maximale vers l'extrémité aval ouverte de la chambre de décharge. Une source d'alimentation 52a alimente le circuit magnétique 52. Cette source d'alimentation 52a est disposée dans l'unité d'alimentation PPU 20a.

La cathode 54 joue le rôle d'organe émetteur d'électrons neutralisant le faisceau ionique. L'organe émetteur d'électrons neutralisant le faisceau ionique est réalisé avec la cathode 54 et utilise une génération d'un plasma de maintien en température (en anglais « keeper »). L'organe émetteur d'électrons neutralisant le faisceau ionique comporte également une résistance électrique 56 de chauffage initial. Le chauffage est par ailleurs réalisé par le courant traversant le plasma de maintien en température. Une source de courant 55a, alimentée par la batterie, alimente, via des électrodes, le plasma de maintien en température de l'organe émetteur d'électrons neutralisant le faisceau ionique pour réaliser un maintien en température.

La génération et l'entretien d'un plasma de maintien en température sont induits notamment par la présence combinée d'un débit de fluide et d'un courant dit de retour traversant le plasma de maintien en température.

Lorsque l'organe d'ionisation et d'accélération du plasma de propulsion est activé, le courant de retour circule dans l'organe émetteur d'électrons neutralisant le faisceau ionique, ce qui participe à son maintien en température. Lorsque l'organe d'ionisation et d'accélération n'est pas activé, le courant de retour dû à l'accélération des ions est nul et le courant de retour total correspond seulement au courant généré pour l'entretien du plasma de maintien en température dans l'organe émetteur d'électrons neutralisant le faisceau ionique.

La cathode 54, de préférence une cathode creuse, est placée en aval de l'extrémité aval ouverte de la chambre de décharge. La cathode est réalisée avec un matériau du type thermoïonique. La cathode 54 sert à la fois pour la génération du plasma de propulsion 57 dans la chambre de décharge en jouant le rôle de chemin pour le courant de retour, et sert également pour la neutralisation du faisceau ionique. Une partie des électrons sont émis dans la chambre de décharge et servent pour la génération du plasma de propulsion et une partie des électrons sont émis à l'extrémité aval ouverte de la chambre de décharge et servent pour la neutralisation.

La résistance électrique 56 de chauffage à l'allumage (ou « heater » en anglais) est utilisée lors de l'allumage initial pour chauffer le matériau thermoïonique de l'organe émetteur d'électrons neutralisant le faisceau ionique, à une température nécessaire et suffisante afin de lui permettre ensuite d'émettre des électrons. Cette résistance électrique de chauffage 56 de la cathode est située à proximité de la cathode 54, soit autour, soit en contact direct avec ladite cathode, en fonction des types de cathodes utilisées. Une source de courant 56a alimente la résistance électrique de chauffage 56 de la cathode 54. Cette source de courant est disposée dans l'unité d'alimentation PPU.

Des électrodes de maintien en température sont situées à proximité de la cathode 54. Les électrodes de maintien en température comprennent une électrode 55 et un point électrique de retour CRP. Ces électrodes sont destinées à maintenir la cathode 54 suffisamment chaude pour l'émission d'électrons, en alimentant en courant le plasma de maintien en température 59. Une source de courant 55a alimente le plasma de maintien en température 59 de la cathode. Cette source de courant est disposée dans l'unité d'alimentation PPU.

La cathode 54 est chauffée pour atteindre une température seuil correspondant à la température minimale qui permet l'émission d'électrons.

Les électrons décrivent des trajectoires circonférentielles dans la chambre de décharge dans un plan de sortie. Du fluide est injecté dans la chambre de décharge. Les électrons percutent et ionisent les atomes neutres de fluide circulant de l'injecteur de fluide vers le plan de sortie, créant ainsi des ions. De plus, ces électrons créent un champ électrique E axial qui accélère ces ions depuis l'anode 53 vers le plan de sortie. Ces ions sont ainsi éjectés à grande vitesse de la chambre de décharge par son plan de sortie, ce qui engendre une poussée.

L'unité de régulation 30a des débits de fluide, associé au propulseur à Effet Hall 50, comporte une ou plusieurs vannes 31 configurées pour réguler le débit de fluide dans la chambre de décharge et une ou plusieurs vannes 31 configurées pour réguler le débit de fluide utilisé par la cathode. Une interface 31a d'alimentation et de gestion du pilotage de la ou les vannes est par exemple disposée dans l'unité d'alimentation PPU 20a.

Lors d'une poussée, les panneaux solaires produisent de l'énergie électrique. L'anode 53 est alors alimentée par son bloc d'alimentation 53a. La cathode 54 reçoit d'une part le courant de décharge. D'autre part la cathode 54 émet des électrons pour la neutralisation du faisceau ionique. Le circuit magnétique 52 applique un champ magnétique autour de la chambre de décharge. En fonction de certaines caractéristiques du propulseur, le courant de maintien en température de la cathode 54 peut ou non être activé lors des phases de poussée. Lorsque le courant de maintien en température de la cathode 54 est activé, le courant délivré par l'alimentation 55a dans le plasma de maintien en température est à sa valeur nominale. Le débit de fluide est alors réglé à sa valeur nominale pour le maintien en température au niveau de la cathode 54.

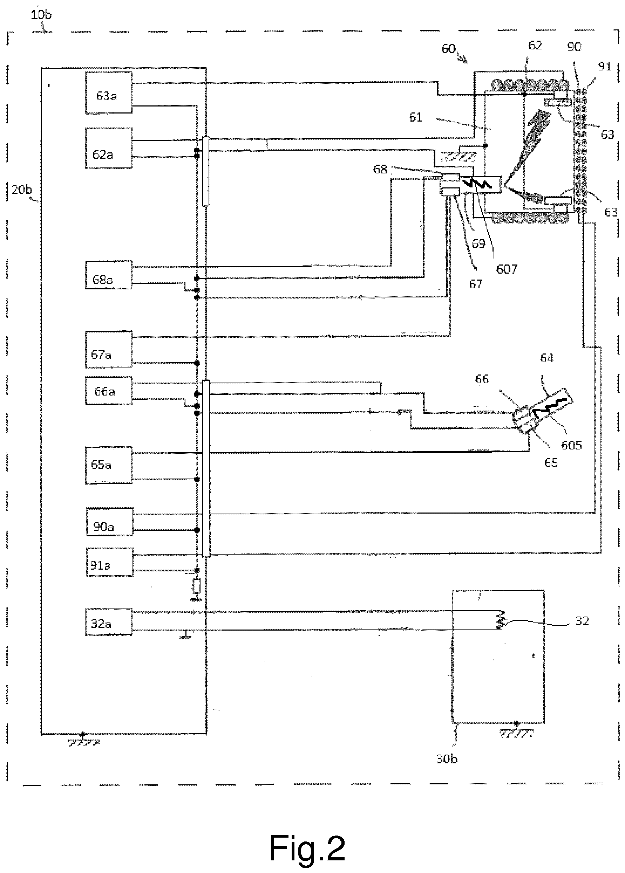

La figure 2 est une représentation schématique d'un exemple de système de propulsion électrique, comportant un propulseur plasmique à grilles de type Kaufman, connu sous l'acronyme anglais GIT (« Gridded Ion Thruster »).

L'organe d'ionisation et d'accélération du plasma de propulsion comprend, par exemple, dans le propulseur à grilles de type Kaufman :
- une chambre 61 de décharge,
- un ou plusieurs circuits magnétiques 62,
- une cathode 69,
- une anode 63 générant une décharge 601 entre l'anode 63 et la cathode 69 et
- deux grilles 90 et 91 d'accélération complétées le cas échéant par une troisième grille de décélération des ions.

Dans un souci de clarté, nous n'avons pas représenté de troisième grille dite de décélération.

Dans le moteur à grille de type GIT, l'organe émetteur d'électrons neutralisant le faisceau ionique peut être maintenu à température par un courant dans le plasma de maintien en température 605 et être chauffé, lors d'une phase de chauffage initial, par une résistance 66. La résistance électrique 66 de chauffage à l'allumage (ou « heater » en anglais) est utilisée lors de l'allumage initial pour chauffer le matériau thermoïonique de l'organe émetteur d'électrons neutralisant le faisceau ionique afin de lui permettre ensuite d'émettre des électrons.

L'organe émetteur d'électrons neutralisant le faisceau ionique se présente sous la forme d'un neutraliseur 64. Le neutraliseur 64 est disposé après les deux grilles 90, 91, ou le cas échéant après les trois grilles. L'organe 64 émetteur d'électrons neutralisant le faisceau ionique peut être maintenu à température par un courant dans le plasma de maintien en température 605 mais être chauffé pour un chauffage initial par une résistance 66. La résistance électrique 66 de chauffage à l'allumage (ou « heater » en anglais) est utilisée lors de l'allumage initial pour chauffer l'organe émetteur d'électrons neutralisant le faisceau ionique afin de lui permettre ensuite d'émettre des électrons. La résistance de chauffage 66 du neutraliseur 64 est située à proximité du neutraliseur, soit autour, soit en contact direct avec le neutraliseur 64, en fonction des types de neutraliseurs utilisés. Une source de courant 66a alimente la résistance de chauffage 66 du neutraliseur. Cette source de courant est disposée dans l'unité d'alimentation PPU 20b. Des électrodes de maintien en température 65 sont situées à proximité du neutraliseur 64 et sont destinées à maintenir le neutraliseur suffisamment chaud pour l'émission d'électrons et alimenter en courant le plasma de maintien en température du neutraliseur. Une source de courant 65a alimente le plasma de maintien en température du neutraliseur. Cette source de courant est disposée dans l'unité d'alimentation PPU 20b.

Le circuit magnétique 62 entoure la chambre de décharge 61. Le circuit magnétique 62 est destiné à générer un champ magnétique de confinement du plasma de propulsion dans la chambre de décharge. Une source d'alimentation 62a alimente ledit circuit magnétique. Ladite source d'alimentation est disposée dans l'unité d'alimentation PPU 20b.

Les parois métalliques de la chambre de décharge 61 forment l'anode 63. Une source d'alimentation 63a, par exemple une source de courant, alimente l'anode 63. Cette source de courant fait partie du bloc d'alimentation appartenant à l'unité d'alimentation PPU 20b.

Les deux grilles 90, 91 sont disposées successivement, au niveau d'une extrémité aval ouverte de la chambre de décharge. Les deux grilles, dites grille écran 90 et grille accélératrice 91, sont polarisées à des potentiels électriques de signes opposés et de valeurs généralement distinctes. Une source d'alimentation 90a, par exemple une source de tension, alimente la grille écran 90. Une autre source d'alimentation 91a, par exemple une source de tension, alimente la grille accélératrice 91a. Les deux sources de tension 90a, 91a sont disposées dans l'unité d'alimentation PPU 20b.

Lorsque le propulseur à grilles de type Kaufman comporte trois grilles, la troisième grille est nommée grille de décélération et est disposée après les deux grilles 90, 91. La troisième grille est généralement reliée au châssis du propulseur.

La cathode 69, située à l'intérieur de la chambre de décharge, est placée à l'extrémité amont fermée de la chambre de décharge 61. Cette cathode 69 sert d'électrode de retour du courant de décharge délivré par l'électrode d'anode 63 lors de la génération du plasma de propulsion.

Une résistance de chauffage 68 de la cathode est située à proximité de cette cathode, soit autour, soit en contact direct avec la cathode, en fonction des types de cathodes utilisées. Cette résistance de chauffage est destinée à chauffer la cathode 69 à une température nécessaire et suffisante pour qu'elle puisse émettre des électrons. Cette cathode 69 est réalisée avec un matériau du type thermoïonique. Une source de courant 68a alimente la résistance de chauffage de la cathode. Cette source de courant est disposée dans l'unité d'alimentation PPU 20b. La résistance de chauffage 68 de la cathode se présente par exemple sous la forme d'un fil métallique entourant le matériau thermoïonique et présentant une résistance électrique chauffante. Des électrodes de maintien en température 67 sont situées à proximité de la cathode 69. Les électrodes de maintien en température 67 sont destinées à maintenir la cathode 69 suffisamment chaude pour l'émission d'électrons en générant un courant dans le plasma de maintien en température 607. Une source de courant 67a alimente le plasma de maintien en température 607 de la cathode 69. Cette source de courant est disposée dans l'unité d'alimentation PPU 20.

Le neutraliseur 64 est quant à lui disposé sur le côté du châssis du propulseur, la sortie de ce neutraliseur étant disposée après les deux grilles 90, 91 (ou après les trois grilles dans une configuration à trois grilles). Une résistance de chauffage 66 du neutraliseur 64 est située à proximité du neutraliseur, soit autour, soit en contact direct avec le neutraliseur, en fonction des types de neutraliseurs utilisés. Cette résistance de chauffage est destinée à chauffer le neutraliseur 64 à une température nécessaire et suffisante pour qu'il puisse émettre des électrons, lors d'une phase initiale. Le neutraliseur est réalisé avec un matériau du type thermoïonique. Une source de courant 66a alimente la résistance de chauffage 66 du neutraliseur 64. Cette source de courant est disposée dans l'unité d'alimentation PPU 20. Des électrodes de maintien en température 65 sont situées à proximité du neutraliseur 64. Les électrodes de maintien en température 65 sont destinées à maintenir le neutraliseur 64 suffisamment chaud pour l'émission d'électrons en générant un courant dans un plasma de maintien en température (« keeper » en anglais) du neutraliseur 64. L'électrode de retour du courant correspond au point électrique commun du neutraliseur (CRP). Une source de courant 65a alimente le plasma de maintien en température du neutraliseur. Cette source de courant est disposée dans l'unité d'alimentation PPU 20b.

La génération du plasma de propulsion dans la chambre de décharge 61 est assurée par la différence de potentiel entre l'anode 63 et la cathode 69. La cathode 69 est chauffée jusqu'à ce qu'elle atteigne une température seuil correspondant à la température minimale qui permet l'émission par la cathode d'une quantité d'électrons nécessaire à l'établissement dans la chambre de décharge 61 d'un courant de décharge suffisant pour ioniser les atomes neutres du fluide dans la chambre de décharge. Le circuit magnétique 62 génère un champ magnétique. Les électrons émis par la cathode 69 s'entrechoquent avec les atomes neutres du fluide injecté dans la chambre de décharge 61. Grâce à ces impacts, les atomes neutres se transforment en ions et en électrons. D'une part, les ions créés sortent ensuite d'abord par la grille écran 90, chargée positivement, et sont accélérés par le champ électrique entre les deux grilles 90, 91. Les ions sont accélérés par la différence de potentiel générée entre les deux grilles, et éjectés à grande vitesse, ce qui engendre une poussée. D'autre part, les électrons créés sont collectés par la grille écran.

Afin d'assurer la neutralisation du faisceau ionique, une quantité d'électrons ajustée est émise par le neutraliseur 64 de sorte que le courant électronique absorbé par le neutraliseur 64 est égal au courant ionique du faisceau ionique.

L'unité de régulation 30b des débits de fluide, associé au propulseur plasmique, comporte une ou plusieurs vannes 32 configurées pour réguler le débit de fluide dans la chambre de décharge 61, une ou plusieurs vannes 32 configurées pour réguler le débit de fluide pour la cathode 69, et une ou plusieurs vannes 32 configurées pour réguler le débit de fluide pour le neutraliseur 64. Une interface 32a d'alimentation et de gestion du pilotage desdites vannes est par exemple disposée dans l'unité d'alimentation PPU 20b.

Lors d'une poussée générée par le propulseur, les panneaux solaires produisent de l'énergie électrique. L'anode 63 est alimentée par sa source d'alimentation 63a. La cathode 69 émet des électrons dans la chambre de décharge 61. Le circuit magnétique 62 applique un champ magnétique de confinement du plasma de propulsion dans la chambre de décharge 61. Le neutraliseur 64 émet des électrons pour la neutralisation du faisceau ionique. La grille écran 90 et la grille accélératrice 91 sont alimentées. En fonction de certaines caractéristiques du propulseur, lorsque le courant de maintien en température du neutraliseur 64 est actif lors des phases de poussée, le courant délivré par l'alimentation 65a dans le plasma de maintien en température du neutraliseur est réglé à sa valeur nominale tandis que le débit de fluide pour le plasma de maintien en température du neutraliseur 64 est réglé à sa valeur nominale.

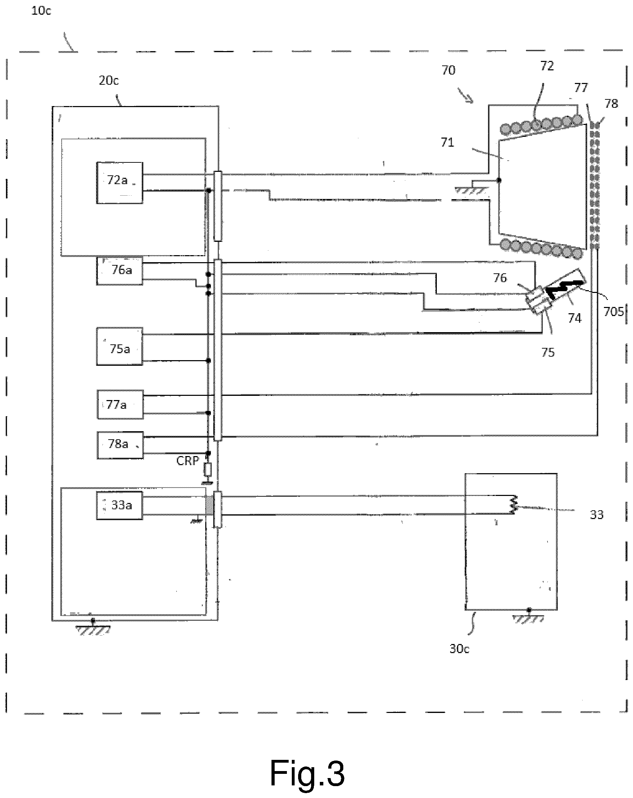

La figure 3 est une représentation schématique d'un système de propulsion électrique, comportant un propulseur plasmique radiofréquence à grilles, connu sous l'acronyme anglais RIT («Radio-frequency Ion Thruster »).

L'organe d'ionisation et d'accélération du plasma de propulsion comprend, par exemple, dans le propulseur plasmique radiofréquence à grilles :
- une chambre 71 de décharge,
- une ou plusieurs bobines 72 réalisant un couplage inductif pour injecter de la puissance dans le plasma de décharge et
- deux grilles 77 et 78 d'accélération éventuellement complétées par une troisième grille dite de décélération des ions.

Pour des raisons de clarté la troisième grille de décélération n'a pas été représentée.

La bobine 72 entoure la chambre de décharge 71. La bobine 72 est alimentée par une source de tension alternative dite radiofréquence 72a. Les deux grilles 77, 78 sont disposées successivement, au niveau d'une extrémité aval ouverte de la chambre de décharge. Les deux grilles, dites grille écran 77 et grille accélératrice 78, sont chargées à un potentiel électrique de signe opposé. Une source d'alimentation 77a, par exemple une source de tension, alimente la grille écran 77. Une autre source d'alimentation 78a, par exemple une source de tension, alimente la grille accélératrice 78. Les deux sources de tension 77a, 78a sont disposées dans l'unité d'alimentation PPU 20c. Lorsque le propulseur plasmique radiofréquence comporte trois grilles, la troisième grille est nommée grille de décélération et est disposée après les deux autres grilles 77 et 78. La troisième grille est généralement connectée au châssis du propulseur. La bobine 72, lorsqu'elle est alimentée, permet la génération du plasma de propulsion dans la chambre de décharge 71 en ionisant le fluide injecté dans la chambre de décharge. Le plasma de propulsion est ainsi induit par radiofréquence. Les ions créés sortent ensuite par la grille écran 77, chargée positivement, et sont accélérés par le champ électrique entre des deux grilles 77, 78. Les ions sont accélérés par la différence de potentiel générée entre les deux grilles, et éjectés à grande vitesse, ce qui engendre une poussée.

L'organe émetteur d'électrons neutralisant le faisceau ionique se présente sous la forme d'un neutraliseur 74. Le neutraliseur 74 est disposé après les deux grilles 77, 78 ou après les trois grilles dans une configuration à trois grilles. L'organe 74 émetteur d'électrons neutralisant le faisceau ionique peut être maintenu à température par un courant dans le plasma de maintien en température 705 mais être chauffé pour un chauffage initial par une résistance 76. La résistance électrique 76 de chauffage à l'allumage (ou « heater » en anglais) est utilisée lors de l'allumage initial pour chauffer l'organe émetteur d'électrons neutralisant le faisceau ionique afin de lui permettre ensuite d'émettre des électrons. La résistance de chauffage 76 du neutraliseur 74 est située à proximité du neutraliseur, soit autour, soit en contact direct avec le neutraliseur 74, en fonction des types de neutraliseurs utilisés. Une source de courant 76a alimente la résistance de chauffage 76 du neutraliseur. Cette source de courant est disposée dans l'unité d'alimentation PPU 20c. Des électrodes de maintien en température 75 sont situées à proximité du neutraliseur 74 et sont destinées à maintenir le neutraliseur suffisamment chaud pour l'émission d'électrons et alimenter en courant le plasma de maintien en température 705 du neutraliseur. Une source de courant 75a alimente le plasma de maintien en température du neutraliseur. Cette source de courant est disposée dans l'unité d'alimentation PPU 20c.

L'unité de régulation 30c du débit de fluide, associé au propulseur plasmique, comporte une ou plusieurs vannes 33 configurées pour réguler le débit de fluide dans le neutraliseur 74 et dans l'organe de propulsion. Une interface 33a d'alimentation et de gestion du pilotage des vannes est par exemple disposée dans l'unité d'alimentation PPU 20c.

Lors d'une poussée, les panneaux solaires produisent de l'énergie électrique. L'alimentation de la bobine 72a fournit de la puissance à la bobine 72. Le neutraliseur 74 émet des électrons pour la neutralisation du faisceau ionique. La grille écran 77 et la grille accélératrice 78 sont alimentées. En fonction de certaines caractéristiques du propulseur, lorsque le courant de maintien en température est actif lors des poussées, le débit de fluide dans le neutraliseur 74 est alors réglé à sa valeur nominale et le courant délivré par l'alimentation 75a dans le plasma de maintien en température est réglé à sa valeur nominale.

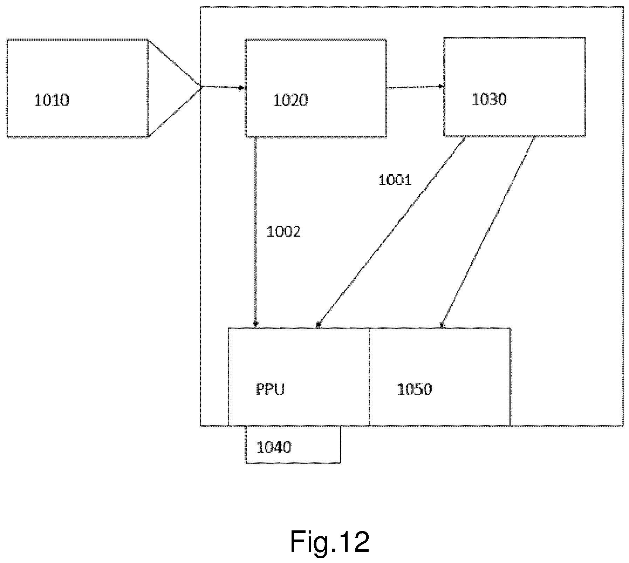

Pour les moteurs de type HET, RIT ou GIT, le système de propulsion électrique 10a, 10b o 10c du véhicule spatial comporte ainsi une unité PPU de pilotage 20a, 20b ou 20c, une unité de distribution de l'énergie 1020 et une unité de régulation 30a, 30b ou 30c des débits de fluide pour chaque propulseur plasmique. L'unité d'alimentation électrique, couramment nommée PPU (acronyme anglais pour « Power Processing Unit »), fournit une alimentation adaptée au fonctionnement et au contrôle du propulseur plasmique et pilote, par exemple, l'unité de régulation des débits de fluide. Alternativement un ordinateur de bord 1050 peut piloter l'unité de régulation des débits de fluide. L'unité de distribution de l'énergie 1020 peut recevoir des commandes de l'ordinateur de bord 1050. Comme représenté à la figure 12, le bus 1002 alimenté directement par les panneaux solaires 1010 peut être piloté par l'unité 1020 de distribution de l'énergie. L'unité de distribution 1020 d'énergie alimente la PPU et la batterie 1030. La batterie alimente par ailleurs le bus 1001 relié également à la PPU. La PPU pilote et alimente le moteur plasmique 1040.

Pour les moteurs de type HET, RIT ou GIT, l'unité d'alimentation PPU assure les fonctions électriques telles que par exemple la commande et la fourniture de la puissance au propulseur plasmique et la surveillance du propulseur plasmique. Le pilotage comprend les trois phases suivantes :
- la génération d'un plasma de propulsion ;
- l'accélération des ions générés dans le plasma de propulsion ;
- la neutralisation des ions accélérés en sortie du propulseur plasmique.

Pour les moteurs de type HET, RIT ou GIT, la génération du plasma de propulsion et l'accélération des ions générés dans le plasma de propulsion sont réalisées par l'organe d'ionisation et d'accélération du plasma de propulsion, dit organe de propulsion. Lors de la phase de génération du plasma de propulsion, on injecte et on ionise un fluide, préférentiellement un gaz, généralement du xénon, dans la chambre de décharge. Lors de la phase d'accélération des ions générés dans le plasma de propulsion, on accélère les ions grâce à l'application d'un champ électrique. Les éléments constitutifs de l'organe d'ionisation et d'accélération du plasma de propulsion dépendent du type de propulseur plasmique.

Pour les moteurs de type HET, RIT ou GIT, la phase de neutralisation des ions accélérés en sortie du propulseur plasmique est réalisée par l'organe émetteur d'électrons neutralisant le faisceau ionique. L'organe émetteur d'électrons neutralisant le faisceau ionique émet des électrons neutralisant les ions positifs accélérés, pour une neutralité du véhicule spatial.

Pour les moteurs de type HET, RIT ou GIT, l'organe émetteur d'électrons neutralisant le faisceau ionique est chauffé à au moins une température seuil déterminée qui permet l'émission des électrons. Cet organe émetteur d'électrons est en effet réalisé dans un matériau thermoïonique. La batterie alimente avantageusement, en énergie électrique, l'organe émetteur d'électrons neutralisant le faisceau ionique. Les blocs de pilotage et d'alimentation, appartenant à la PPU, nécessaires au fonctionnement de l'organe émetteur d'électrons neutralisant le faisceau ionique, restent alimentés, via la batterie, et peuvent fonctionner pendant une éclipse solaire. Les panneaux solaires alimentent en revanche directement un bloc d'alimentation d'ionisation 72a ou le bloc d'alimentation d'anode appartenant à l'unité de pilotage. On entend par alimentation directe par les panneaux solaires, une alimentation n'utilisant pas la batterie, et passant, par exemple, via l'unité de distribution d'énergie. Le bloc d'alimentation d'ionisation, pour un moteur RIT, ou le bloc d'alimentation d'anode, pour un moteur HET ou GIT, fournit la puissance de poussée en générant la décharge du plasma de propulsion.

Les éléments alimentés directement par les panneaux solaires comprennent notamment :
- pour un propulseur à Effet Hall 50 : l'anode 53 et le circuit magnétique 52 ;
- pour un propulseur plasmique à grilles de type Kaufman 60 : les deux grilles 90, 91, l'anode 63 et le circuit magnétique 62 ;
- pour un propulseur plasmique radiofréquence 70 : les deux grilles 77, 78 et la bobine 72.

Les éléments alimentés par batterie comprennent notamment :
- pour un propulseur à Effet Hall 50 : la résistance de chauffage 56 et la source de courant alimentant les électrodes de maintien en température 55 générant le courant le plasma de maintien en température de la cathode 54;
- pour un propulseur plasmique à grilles de type Kaufman 60 : la résistance de chauffage 66 et la source de courant alimentant les électrodes de maintien en température 65 générant le courant le plasma de maintien en température du neutraliseur 64 et éventuellement la résistance de chauffage 68 et la source de courant alimentant les électrodes de maintien en température 67 générant le courant le plasma de maintien en température de la cathode 69,
- pour un propulseur plasmique radiofréquence 70 : la résistance de chauffage 76 et la source de courant alimentant les électrodes de maintien en température 75 générant le courant dans le plasma de maintien en température du neutraliseur 74.

Pour les moteurs de type HET, RIT ou GIT, l'unité de régulation 30 des débits de fluide, qui gère les débits de fluide en pilotant des vannes est par exemple alimentée par batterie, en raison de sa consommation d'énergie relativement faible et pour permettre une régulation fluidique durant l'éclipse solaire.

Pour les moteurs de type HET, RIT ou GIT, l'unité de répartition de l'énergie est par exemple alimentée par la batterie.

Pour les moteurs de type HET, RIT ou GIT, l'ordinateur de bord peut être alimenté par la batterie. D'autres modules réalisant des fonctions, comme la commande numérique, peuvent par exemple être alimentées par la batterie afin de ne pas subir de coupures de courant dues aux éclipses solaires.

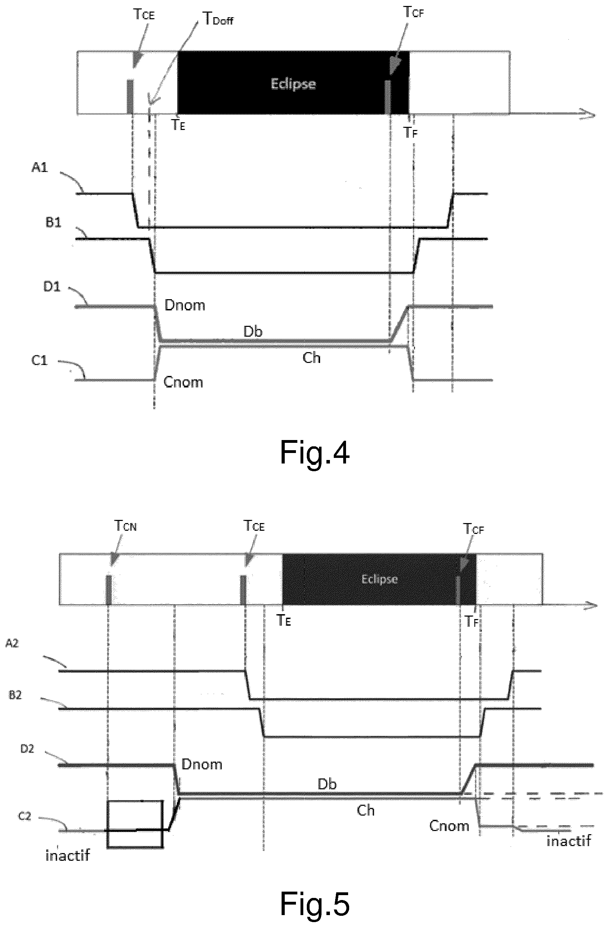

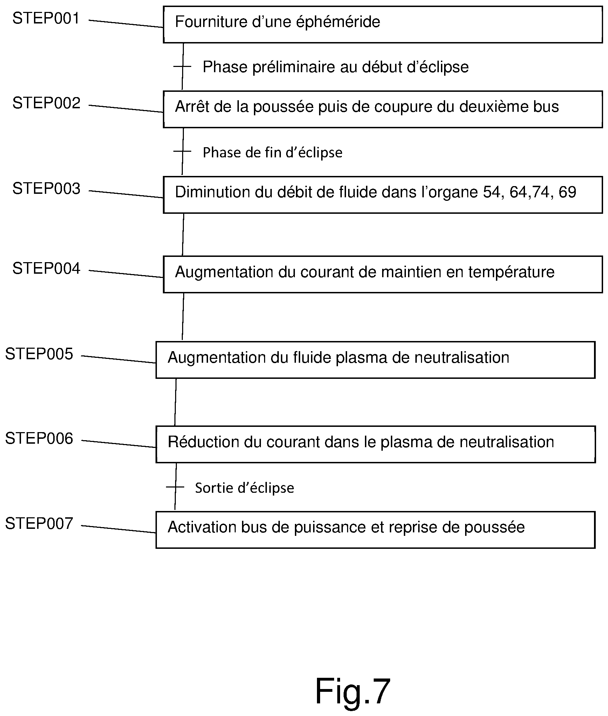

La figure 4 présente un schéma d'un exemple de gestion, pendant une éclipse solaire, d'un propulseur plasmique du type utilisant le plasma de maintien en température de l'organe émetteur d'électrons neutralisant le faisceau ionique, toujours à l'état activé même pendant une phase de poussée et la figure 7 représente un exemple de procédé de pilotage selon l'invention correspondant à la figure 4. Par organe émetteur d'électrons neutralisant le faisceau ionique activé, on entend que le plasma de maintien en température de l'organe émetteur d'électrons neutralisant le faisceau ionique est donc alimenté en courant par sa source de courant.

Le procédé comprend une étape STEP001 de fourniture d'une ou plusieurs éphémérides. Une éphéméride est représentative du début et de la fin d'une ou plusieurs éclipses solaires. La télécommande peut par exemple être transmise, par exemple par ondes radio, à l'ordinateur de bord, par la station au sol, via le module de télécommunication.

Grâce à l'éphéméride, l'ordinateur de bord peut anticiper une éclipse solaire et déterminer pour chaque éclipse, trois phases successives :
- une phase préliminaire déclenchée avant le début de l'éclipse solaire, comprise par exemple entre 10sec et 5min avant la date de début d'éclipse, correspondant par exemple à la durée nécessaire pour arrêter la poussée du propulseur plasmique, une marge temporelle pouvant être ajoutée afin de rendre la séquence davantage robuste aux éventuelles erreurs des éphémérides, suivie de
- une phase de fin d'éclipse juste avant la fin de l'éclipse ou juste après la fin de l'éclipse, comprise par exemple entre 10sec et 5min avant la date de fin d'éclipse ou pouvant débuter dès la fin de l'éclipse, suivie de
- une phase en sortie d'éclipse pouvant débuter dès la fin de l'éclipse.

La PPU déclenche par exemple le procédé suite à une commande reçue de l'ordinateur de bord. L'ordinateur de bord envoie par exemple les commandes de synchronisation T_{CN}, T_{CE} et T_{CF} à la PPU correspondant à des dates pour se synchroniser avec la phase préliminaire, la phase de fin d'éclipse et la phase de sortie d'éclipse. Au cours de la phase préliminaire, la PPU exécute une étape STEP002 d'arrêt de la poussée du propulseur plasmique puis de coupure, par l'unité de distribution de l'énergie, du bus alimenté directement par le ou les panneaux solaires. Les sources d'alimentation, correspondant à la courbe référencée A1, des éléments servant à l'accélération des ions créés sont par exemple coupées, à l'instant T_{CE}, puis les sources d'alimentation, correspondant à la courbe référencée B1, des éléments servant à la génération du plasma de propulsion sont coupées, à un instant T_{Doff}. La poussée du propulseur plasmique reste arrêtée pendant toute l'éclipse solaire.

On exécute ensuite une étape STEP003 de diminution du débit de fluide, correspondant à la courbe référencée D1, alimentant le plasma de maintien en température passant de sa valeur nominale Dₙₒₘ jusqu'à une valeur prédéfinie D_{B} non nulle. Cette valeur de débit, prédéterminée par des essais au sol, est mémorisée par la PPU.

La PPU exécute par ailleurs une étape STEP004 d'augmentation du courant électrique, correspondant à la courbe référencée C1, dans le plasma de maintien en température passant de sa valeur nominale Cₙₒₘ jusqu'à une valeur prédéfinie Cₕ pour un maintien en température, hors poussée, du plasma de maintien en température, ce plasma de maintien en température étant alimenté par le bus alimenté par la batterie. Cette valeur de courant, prédéterminée par des essais au sol, est mémorisée par la PPU.

Ces étapes STEP003 de diminution du débit de fluide et STEP004 d'augmentation du courant peuvent être réalisées de façon concomitante.

Les réglages sont maintenus durant l'éclipse qui débute à T_{E}, jusqu'à la phase de fin d'éclipse.

Une telle diminution du débit de fluide dans l'organe émetteur d'électrons neutralisant le faisceau ionique permet avantageusement d'économiser le fluide, pendant la phase d'éclipse solaire. Par ailleurs le courant circulant dans le plasma de maintien en température est suffisamment faible pour être fourni par la batterie, durant l'éclipse solaire, et permet ainsi de maintenir, à une température fonctionnelle, l'organe émetteur d'électrons neutralisant le faisceau ionique. Même si ce dernier n'émet pas d'électrons, il est prêt à émettre des électrons.

La diminution du débit du flux de fluide dans l'organe émetteur d'électrons neutralisant le faisceau ionique permet de maintenir une faible consommation de fluide et donc un impact négligeable sur l'emport de fluide nécessaire pour la mission. Afin que le plasma de maintien en température utilisé par l'organe émetteur d'électrons neutralisant le faisceau ionique soit maintenu à une densité suffisante, le courant d'alimentation du plasma de maintien en température est augmenté, en réglant l'alimentation des électrodes de maintien en température.

Au cours de la phase de fin d'éclipse, on exécute, à T_{CF}, une étape STEP005 d'augmentation du débit de fluide alimentant le plasma de maintien en température jusqu'à sa valeur nominale Dₙₒₘ.

Après le réglage au débit nominal, la PPU exécute ensuite une étape STEP006 de réduction du courant électrique dans le plasma de maintien en température revenant à sa valeur nominale Cₙₒₘ.

Le moteur est alors prêt à être réactivé.

Ces deux étapes faiblement consommatrices en énergie peuvent avantageusement être réalisées juste avant la sortie d'éclipse afin d'être prêt à la poussée dès la sortie d'éclipse T_{F}.

Par ailleurs, en évitant de nombreux rallumages par chauffage initial à l'aide de la résistance, on réduit les impacts, en termes de fatigue, sur l'organe émetteur d'électrons neutralisant le faisceau ionique, se présentant sous la forme d'une cathode ou d'un neutraliseur, qui se caractérise généralement par une durée de vie limitée notamment en fonction d'un nombre de cycles maximum déterminé. Les rallumages complets répétés seraient en effet source de fatigue matérielle de la cathode ou respectivement du neutraliseur.

Avantageusement encore, on évite, grâce à la présente invention, de nombreux allumages complets du propulseur plasmique, chacun de ces allumages complets étant d'une part long et d'autre part fortement consommateur en fluide de propulsion et en énergie électrique.

Au cours de la phase en sortie d'éclipse, la PPU exécute ensuite une étape STEP007 de mise en tension du bus alimenté directement par panneau solaire puis de reprise de la poussée du propulseur plasmique. Avantageusement la poussée peut reprendre dès la sortie de l'éclipse et le procédé selon l'invention permet un gain en temps de poussée disponible.

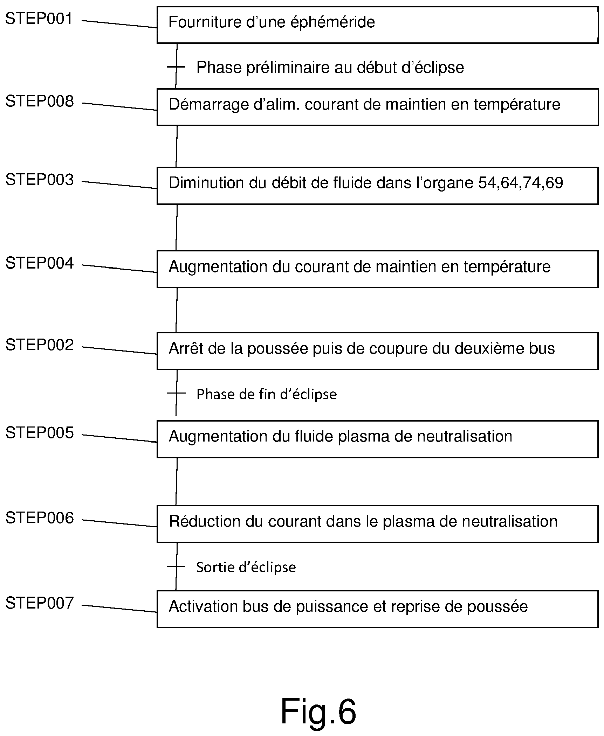

La figure 5 représente un schéma d'un exemple de gestion, pendant une éclipse solaire, d'un propulseur plasmique du type pilotant le plasma de maintien en température de l'organe émetteur d'électrons neutralisant le faisceau ionique, à l'état désactivé pendant une phase de poussée et la figure 6 représente un exemple de procédé de pilotage selon l'invention correspondant à la figure 5.

Comme expliqué précédemment, en relation avec la figure 7, le procédé selon la figure 6 comprend une étape STEP001 de fourniture d'une ou plusieurs éphémérides permettant, à l'ordinateur de bord, d'anticiper une éclipse solaire et déterminer pour chaque éclipse, la phase préliminaire, la phase de fin d'éclipse et la phase en sortie d'éclipse.

Au cours de la phase préliminaire, la PPU exécute, à T_{CN}, une étape STEP008 de démarrage de l'alimentation du courant de maintien en température, schématisée par une fenêtre rectangulaire.

On exécute ensuite une étape STEP003 de diminution du débit de fluide, correspondant à la courbe D2, alimentant le plasma de maintien en température jusqu'à une valeur prédéfinie D_{b} non nulle inférieure à une valeur nominale Dₙₒₘ.

La PPU exécute par ailleurs une étape STEP004 d'augmentation du courant électrique, correspondant à la courbe C2, dans le plasma de maintien en température jusqu'à une valeur prédéfinie Cₕ pour un maintien en température, hors poussée, du plasma de maintien en température, ce plasma de maintien en température étant alimenté par bus lui-même alimenté par la batterie.

Ces deux étapes STEP003 de diminution du débit de fluide et STEP004 d'augmentation du courant électrique peuvent être réalisées de façon concomitante.

La PPU exécute ensuite, à T_{CE}, une étape STEP002 d'arrêt de la poussée du propulseur plasmique, correspondant à la courbe A2, puis de coupure, par une unité de distribution de l'énergie, du bus alimenté directement par le ou les panneaux solaires, correspondant à la courbe B2.

Les réglages sont maintenus durant l'éclipse qui débute à T_{E}, jusqu'à la phase de fin d'éclipse.

La diminution du débit de fluide dans l'organe émetteur d'électrons neutralisant le faisceau ionique permet avantageusement d'économiser le fluide, pendant la phase d'éclipse solaire. Le courant circulant dans le plasma de maintien en température est également suffisamment faible pour être fourni par la batterie durant l'éclipse solaire, et permet ainsi de maintenir, à une température fonctionnelle, l'organe émetteur d'électrons neutralisant le faisceau ionique. Même si ce dernier n'émet pas d'électrons, il reste prêt à émettre des électrons.

La diminution du débit de fluide dans l'organe émetteur d'électrons neutralisant le faisceau ionique permet également de maintenir une faible consommation de fluide et donc un impact négligeable sur l'emport de fluide nécessaire pour la mission. Afin que le plasma de maintien en température utilisé par l'organe émetteur d'électrons neutralisant le faisceau ionique soit maintenu à une densité suffisante, le courant d'alimentation du plasma de maintien en température est augmenté, en réglant l'alimentation des électrodes de maintien en température.

Au cours de la phase de fin d'éclipse, à T_{CF}, on exécute une étape STEP005 d'augmentation du débit de fluide alimentant le plasma de maintien en température jusqu'à sa valeur nominale D_{b}.

La PPU exécute ensuite une étape STEP006 de réduction du courant électrique dans le plasma de maintien en température.

Le moteur est avantageusement prêt à être réactivé.

Ces deux étapes STEP005 et STEP006 faiblement consommatrices en énergie peuvent avantageusement être réalisées juste avant la sortie d'éclipse afin d'être prêt à la poussée dès la sortie d'éclipse T_{F}.

Par ailleurs, en évitant de nombreux rallumages par chauffage initial à l'aide de la résistance, on réduit les impacts, en termes de fatigue, sur l'organe émetteur d'électrons neutralisant le faisceau ionique, se présentant sous la forme d'une cathode ou d'un neutraliseur, qui se caractérise généralement par une durée de vie limitée notamment en fonction d'un nombre de cycles maximum déterminé. Les rallumages complets répétés seraient en effet source de fatigue matérielle de la cathode ou respectivement du neutraliseur.

Avantageusement encore, on évite, grâce à la présente invention, de nombreux allumages complets du propulseur plasmique, chacun de ces allumages complets étant d'une part long et d'autre part fortement consommateur en fluide de propulsion et en énergie électrique.

Au cours de la phase en sortie d'éclipse, la PPU exécute une étape STEP007 de mise en tension, par l'unité de distribution de l'énergie, du bus alimenté directement par le ou les panneaux solaires, puis de reprise de la poussée du propulseur plasmique. Avantageusement la poussée peut reprendre dès la sortie de l'éclipse T_{F} et le procédé selon l'invention permet un gain en temps de poussée disponible.

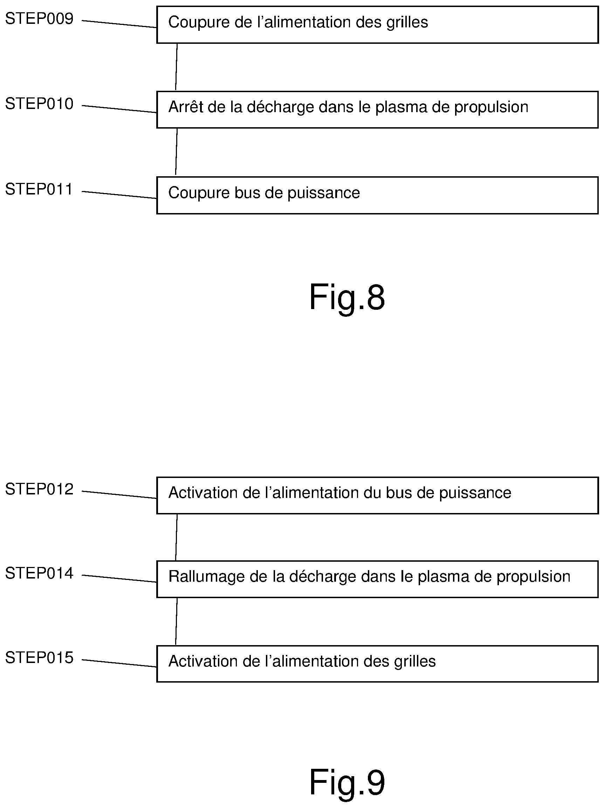

La figure 8 représente un exemple d'arrêt de la poussée puis de coupure du bus alimenté directement par panneau solaire, pour un moteur RIT ou GIT.

La PPU exécute une commande STEP009 de la coupure de la poussée par coupure de l'alimentation des grilles résultant dans une coupure du faisceau ionique.

La PPU exécute également une commande STEP010 d'arrêt de la décharge dans le plasma de propulsion à l'intérieur de la chambre de décharge par coupure du bloc d'alimentation d'ionisation 72a appartenant à l'unité de pilotage.

On exécute ensuite la coupure STEP011 du bus alimenté directement par panneau solaire lors de l'entrée dans l'éclipse.

La figure 9 représente un exemple d'activation du bus de puissance et de reprise de poussée pour un moteur RIT ou GIT.

L'unité de distribution d'énergie pilote l'activation de l'alimentation STEP012 du bus alimenté directement par panneau solaire, lors de la sortie de l'éclipse.

La PPU exécute ensuite une commande STEP014 de rallumage de la décharge dans le plasma de propulsion à l'intérieur de la chambre de décharge 71 par réactivation du bloc d'alimentation d'ionisation 72a appartenant à l'unité de pilotage.

Puis la PPU exécute une commande STEP015 de rallumage de la poussée par réactivation de l'alimentation des grilles résultant dans un rétablissement du faisceau ionique.

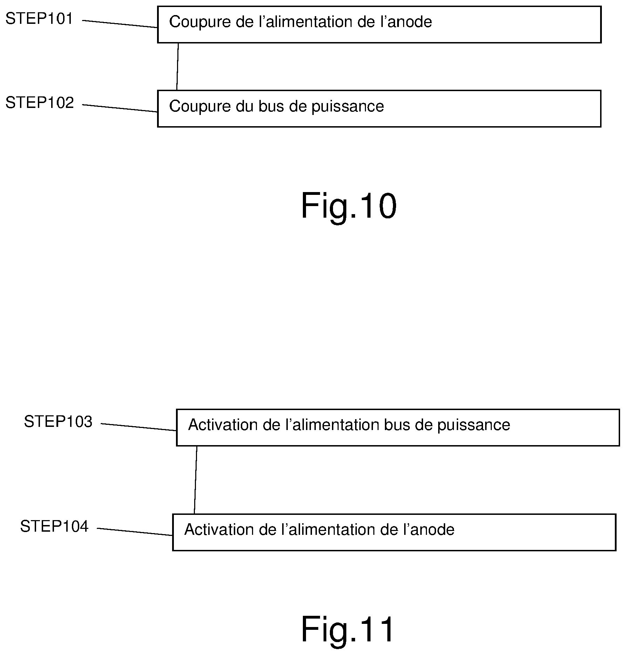

La figure 10 représente un exemple d'arrêt de la poussée puis de coupure du bus alimenté directement par panneau solaire pour un moteur HET.

La PPU exécute une commande STEP101 de coupure de la poussée par coupure de l'alimentation de l'anode résultant dans une coupure du faisceau ionique.

L'unité de distribution de l'énergie commande ensuite la coupure STEP102 du bus alimenté directement par panneau solaire, lors de l'entrée dans l'éclipse.

La figure 11 représente un exemple d'activation du bus de puissance et de reprise de poussée pour un moteur HET.

L'unité de distribution d'énergie commande l'activation de l'alimentation STEP103 du bus alimenté directement par panneau solaire, lors de la sortie de l'éclipse.

La PPU exécute ensuite une commande STEP104 de rallumage de la décharge dans le plasma de propulsion à l'intérieur de la chambre de décharge 57 par réactivation du bloc d'alimentation d'anode 53a appartenant à l'unité de pilotage résultant dans un rétablissement du faisceau ionique.

Comme le montre la présente description, l'invention propose un procédé de gestion d'un système de propulsion électrique d'un véhicule spatial qui permet de minimiser le temps de redémarrage des propulseurs plasmiques d'un système de propulsion électrique, après une éclipse solaire, en conservant l'organe émetteur d'électrons neutralisant le faisceau ionique suffisamment chaud pendant toute l'éclipse solaire.

L'invention propose un procédé de gestion d'un système de propulsion électrique prévoyant notamment d'alimenter le plasma de maintien en température de l'organe émetteur d'électrons neutralisant le faisceau ionique pour des moteurs du type HET, GIT ou RIT mais aussi la cathode nécessaire à la décharge dans le plasma de propulsion dans le cas spécifique du GIT. Le maintien en température est réalisé grâce à un courant électrique fourni par la batterie, tandis que le ou les panneaux solaires alimentent directement le bloc d'alimentation pour les grilles ou pour l'anode selon les types de moteurs respectifs. Grâce à un besoin réduit en consommation électrique de l'organe émetteur d'électrons neutralisant le faisceau ionique pour un moteur de type HET, GIT ou RIT voire, pour le moteur GIT, un besoin réduit en consommation électrique de la cathode 69 nécessaire à la décharge dans le plasma de propulsion, les batteries peuvent être dimensionnées avec une masse additionnelle acceptable.

## Revendications

1. Procédé de gestion d'un système de propulsion électrique (10) d'un véhicule spatial lors d'au moins une éclipse solaire, ledit véhicule spatial comprenant :
- au moins un panneau solaire (1010),
- au moins une batterie (1030) alimentée durant des phases d'ensoleillement par ledit panneau solaire,
- au moins un propulseur plasmique (1040) comportant un organe d'ionisation et d'accélération d'un premier plasma, dit de propulsion, produisant un faisceau ionique et au moins un deuxième plasma, dit de maintien en température, généré au moins dans un organe émetteur d'électrons (54, 64 ou 74) pour neutraliser le faisceau ionique,
- une unité de régulation de débit de fluide alimentant en fluide d'une part le plasma de propulsion et d'autre part le plasma de maintien en température,
- une unité de pilotage en puissance électrique dudit propulseur plasmique , l'unité de pilotage étant alimentée par ledit panneau solaire et par ladite batterie, l'unité de pilotage comprenant au moins un premier bus (1001) alimenté par ladite batterie et au moins un deuxième bus (1002) alimenté directement par ledit panneau solaire,
le procédé comportant :
- une étape (STEP001) de fourniture d'au moins une éphéméride représentative du début et de la fin de ladite éclipse solaire ;
et étant **caractérisé en ce qu'**il comporte :
- dans un premier intervalle de temps prédéterminé avant le début de ladite éclipse solaire :
∘ une étape (STEP002) d'arrêt de la poussée dudit propulseur plasmique, par l'unité de pilotage puis de coupure dudit deuxième bus;
∘ une étape (STEP003) de diminution, commandée par l'unité de régulation, du débit de fluide alimentant le plasma de maintien en température, au moins dans l'organe émetteur d'électrons pour neutraliser le faisceau ionique, jusqu'à une valeur prédéfinie (D_{b}) non nulle inférieure à une valeur nominale (Dₙₒₘ) ;
∘ une étape (STEP004) d'augmentation, commandée par l'unité de pilotage, du courant électrique dans le plasma de maintien en température, au moins dans l'organe émetteur d'électrons pour neutraliser le faisceau ionique, jusqu'à une valeur prédéfinie (Cₕ) pour un maintien en température, hors poussée, du plasma de maintien en température, ledit plasma de maintien en température étant alimenté par ledit premier bus;
- puis, dans un deuxième intervalle de temps prédéterminé avant la fin de l'éclipse solaire ou dans un troisième intervalle de temps prédéterminé après la fin de l'éclipse solaire :
∘ une étape (STEP005) d'augmentation, commandée par l'unité de régulation, du débit de fluide alimentant le plasma de maintien en température, au moins dans l'organe émetteur d'électrons pour neutraliser le faisceau ionique, jusqu'à sa valeur nominale (D_{b}) ;
∘ une étape (STEP006) de réduction, commandée par l'unité de pilotage, du courant électrique dans le plasma de maintien en température, au moins dans l'organe émetteur d'électrons pour neutraliser le faisceau ionique,
- puis en sortie d'éclipse, dans le troisième intervalle de temps prédéterminé après la fin de l'éclipse solaire :
∘ une étape (STEP007) de mise en tension dudit deuxième bus puis de reprise de la poussée du propulseur plasmique, commandée par l'unité de pilotage.

2. Procédé selon la revendication 1, dans lequel lorsque le moteur plasmique est du type GIT et comprend une cathode (69) de génération de la décharge dans le plasma de propulsion, cette cathode (69) de génération étant maintenue en température par un plasma de maintien en température traversé par un courant de maintien en température, les étapes suivantes sont également appliquées à la commande de cette cathode (69) de génération :
∘ l'étape (STEP003) de diminution, commandée par l'unité de régulation, du débit de fluide alimentant le plasma de maintien en température, jusqu'à une valeur prédéfinie (D_{b}) non nulle inférieure à une valeur nominale (Dₙₒₘ) ;
∘ l'étape (STEP004) d'augmentation, commandée par l'unité de pilotage, du courant électrique (55a, 65a, 75a) dans le plasma de maintien en température jusqu'à une valeur prédéfinie (Cₕ) pour le maintien en température, hors poussée, du plasma de maintien en température, ledit plasma de maintien en température étant alimenté par ledit premier bus;
∘ l'étape (STEP005) d'augmentation, commandée par l'unité de régulation, du débit de fluide alimentant le plasma de maintien en température jusqu'à sa valeur nominale (D_{b}) ;
∘ l'étape (STEP006) de réduction, commandée par l'unité de pilotage, du courant électrique dans le plasma de maintien en température

3. Procédé selon la revendication 1 ou 2, dans lequel, lorsque le propulseur plasmique ne nécessite pas de maintien en température de son organe émetteur d'électrons neutralisant le faisceau ionique (74), pendant une phase de poussée dudit propulseur plasmique:
l'étape (STEP002) d'arrêt de la poussée puis de coupure du deuxième bus est réalisée après les étapes (STEP003) de diminution du débit de fluide et (STEP004) d'augmentation du courant de maintien en température,
ces dernières étapes (STEP003, STEP004) étant précédées d'une étape (STEP008) de démarrage de l'alimentation du courant de maintien en température.

4. Procédé selon la revendication 1 ou 2, lorsque le propulseur plasmique nécessite un maintien en température au moins de son organe émetteur d'électrons neutralisant le faisceau ionique (74), par l'unité de pilotage, pendant une phase de poussée, l'étape (STEP002) d'arrêt de la poussée puis de coupure du deuxième bus est réalisée avant les étapes (STEP003) de diminution du débit de fluide et (STEP004) d'augmentation du courant de maintien en température.

5. Procédé selon la revendication 1 à 4 dans lequel dans le cas d'un moteur RIT ou GIT, l'étape (STEP002) d'arrêt de la poussée puis de coupure du deuxième bus comprend successivement :
- une commande (STEP009) de la coupure de la poussée par coupure de l'alimentation des grilles résultant dans une coupure du faisceau ionique et
- une commande (STEP010) de l'arrêt de la décharge dans le plasma de propulsion à l'intérieur de la chambre de décharge par coupure du bloc d'alimentation d'ionisation (72a ou 63a) appartenant à l'unité de pilotage avant
- la coupure (STEP011) du deuxième bus lors de l'entrée dans l'éclipse.

6. Procédé selon l'une des revendications 1 à 5, dans lequel pour les moteurs RIT et GIT, l'étape (STEP007) de mise en tension du deuxième bus puis de reprise de la poussée comprend successivement :
- l'alimentation (STEP012) du deuxième bus commandée lors de la sortie de l'éclipse,
- une commande (STEP014) de rallumage de la décharge dans le plasma de propulsion à l'intérieur de la chambre de décharge par réactivation du bloc d'alimentation d'ionisation (72a) appartenant à l'unité de pilotage avant
- une commande (STEP015) de rallumage de la poussée par réactivation de l'alimentation des grilles résultant dans un rétablissement du faisceau ionique.

7. Procédé selon l'une des revendications 1 à 4, dans lequel dans le cas d'un moteur HET, l'étape (STEP002) d'arrêt de la poussée puis de coupure du deuxième bus comprend successivement :
- une commande (STEP101) de la coupure de la poussée par coupure de l'alimentation de l'anode résultant dans une coupure du faisceau ionique et
- la coupure (STEP102) du deuxième bus lors de l'entrée dans l'éclipse.

8. Procédé selon l'une des revendications 1, 2, 3, 4 et 7, dans lequel pour les moteurs HET, l'étape (STEP007) de mise en tension du deuxième bus puis de reprise de la poussée comprend successivement :
- l'alimentation (STEP103) du deuxième bus lors de la sortie de l'éclipse,
- une commande (STEP104) de rallumage de la décharge dans le plasma de propulsion à l'intérieur de la chambre de décharge par réactivation du bloc d'alimentation d'anode (53a) appartenant à l'unité de pilotage résultant dans un rétablissement du faisceau ionique.

9. Procédé selon l'une des revendications précédentes, dans lequel la coupure ou l'alimentation du deuxième bus (1002) est commandée par une unité (1020) de distribution de l'énergie.
